# EUROPEAN PATENT SPECIFICATION

(11) **EP 3 067 107 B1**
(45) Date of publication and mention of the grant of the patent: **29.05.2019**
(21) Application number: 16159340.5
(22) Date of filing: 09.03.2016
(51) Int. Cl.: B01D 39/04, B01D 24/04

(54) **IMPROVED FILTER FOR FILTRATION OF WATER**
VERBESSERTER FILTER ZUR FILTRATION VON WASSER
FILTRE AMÉLIORÉ POUR LA FILTRATION D'EAU

(30) Priority: 11.03.2015 DE 202015101238 U
(43) Date of publication of application: 14.09.2016
(73) Proprietor: Fibalon GmbH, 92318 Neumarkt/OPf. (DE)
(72) Inventor: Richter, Andreas, 92318 Neumarkt/OPf. (DE)
(74) Representative: Wittmann, Günther

(56) References cited:
- DE-U1- 29 922 419
- DE-U1-202011 106 515
- US-B2- 7 744 680

## Description

The present invention relates to an improved filter for cleaning of water of a swimming pool, a whirl pool or the like.

For cleaning water of swimming pools so-called cartridge filters are used having an exchangeable cartridge insert. The cartridge filter may comprise a thread extending in axial direction and with which the cartridge filter may be screwed to a apparatus. The cartridge filter may be arranged on the apparatus by a form fit. The cartridge filter comprises in the region of the longitudinal axis an outlet around which the inlets are arranged. Between the outlet and the inlets or around the inlets the threat is arranged. The fluids flows through the inlets in the outer portion of the cartridge filter and is pressed through the cartridge filter insert, where it is cleaned, before it exits the middle portion of the cartridge filter out of the cartridge filter.

Such cartridge filters have the disadvantage that their capability or filtering is limited and that they have to be exchanged frequently, since their absorbing capacity is limited. For substituting the cartridge filter insert the housing is opened and the contaminated cartridge filter insert is removed and a new cartridge filter insert is inserted. Thereafter, the housing disclosed. There is a wide variety of different filter types having different size of openings, shapes of openings and filter shapes. Such filter are not compatible. It is not possible to clean and reuse cartridge filter with reasonable efforts. Further, a fluid cleaned by cartridge filter still has a significant turbidity.

The cartridge filter insert essentially comprises a coat extending around the longitudinal axis of the cartridge filter. The cross section of the coat is essentially point-symmetric with respect to the longitudinal axis of the cartridge filter.

Generally, the operation of a cartridge filter and a cartridge filter insert is known to the person skilled in the art and does not have to be described in further detail for the sake of brevity.

As has been noted before, the cleaning capabilities of cartridge filter inserts are merely temporarily appropriate, since their absorption capability is limited, and therefore a cartridge filter insert has to be exchanged frequently. Further, cartridge filter inserts according to the prior art are intricate to produce.

DE 299 22 419 U1 discloses a filter bag with agents for purifying water, wherein the agents are available in particulate form and/or impregnated fiber materials and/or coated fiber materials in the bag, wherein the bag prevents the agents from leaving the bag.

US 7,744,680 B2 discloses a vacuum cleaner bag comprising material being whirled-up under air flow for binding the already sucked-in dust in the vacuum cleaner bag.

DE 20 2011 106515 U1 discloses a filter for cleaning water from e.g. swimming pools using a plurality of fiber formations enclosed in the filter housing.

It is an object of the present invention to provide an improved filter insert, an improved filter and an improved method for exchanging a filter insert.

The object of the invention is achieved by a filter according to claim 1, and a method according to claim 10. The depending claims claim advantageous embodiments.

A filter insert used in the inventive filter comprises a plurality of fiber nettings each comprising a plurality of fibers and through which a fluid may flow. The filter insert further comprises a net in which a plurality of fiber nettings are located and through which a fluid may flow. The fibers filter solids floating in the fluid by agglomerating the solids to the fibers. The fluid may flow and pass the net to the fiber nettings.

A fiber netting may be a fiber fleece, a fiber meshwork, a fiber network, non-woven linked fibers, a fiber element, a fiber item, a sheets of non-woven textiles, a fiber entity, a fiber fabric and/or a fiber bunch.

The inventors of the present invention recognized that a rigid shape or geometry, as it is used for example with cartridge filter inserts of the prior art, is not necessary. Astonishingly, the plurality of fiber nettings located in a flexible bag cause a better cleaning effect and/or have a higher dirt absorption capability for cleaning of liquids and/or fluids. Without being bound to a specific theory, the inventors assume that in the receptacle, such as a cartridge housing, through which the fluid passes the bag and the plurality of fiber nettings are located due to the current such that a comparably long filter path is formed by the fiber nettings. Thereby, a better filtration is effected as is known by cartridge inserts of the prior art.

The active filter length of a cartridge filter insert is determined by the thickness of the material of the cartridge filter insert. In contrast thereto, the current of a fluid in a housing causes that the plurality of fiber nettings is located at the outlet and outlets, respectively of the filter and filter housing, respectively. Thereby, a long the filter path may be achieved, improving filtration. The filter insert of the present invention does not require a particular shape and geometry, respectively, which has to be manufactured and verified by costly machines and methods. The fiber nettings may comprise almost any shape. Therefore, the inventive filter insert may be manufactured in a cost efficient manner.

The filter insert filtrates essentially by the fibers of the fiber netting solids and sentiments, respectively floating in the fluid by the fibers of the fiber netting, wherein the solids and sentiments, respectively attach and/or agglomerate at the fibers. The fiber nettings comprise due to the plurality of fibers a comparably big surface. The surface may be treated mechanically, such as roughened.

The fiber netting may comprise a plurality of synthetic fibers, a plurality of thermoplastic fibers, a plurality of polymer fibers, a plurality of viscose fibers, a plurality of polypropylene fibers, a plurality of natural fibers, a plurality of cotton fibers, a plurality of cellulose fibers and/or a mixture of said fibers. The fibers may be coated and/or impregnated by a soluble polymeric material, polyacrylamide, polyvinyl alcohol, alginate, polyacrylate and/or derivates of cellulose to further increase the filtration capability of the fiber nettings.

The fiber nettings may have a spherical, ellipsoid, cylindrical, cuboid, cubical or any other three-dimensional shape. In one embodiment of the invention rotation-symmetrical fiber nettings are preferred.

The fiber netting may comprise a longitudinally related mass of approximately 1.7 dtex to approximately 150 dtex, preferably approximately 1.7 dtex to approximately 80 dtex. The fiber netting may comprise in a dry state a density of approximately 10 kg/m³ to approximately 60 kg/m³. The outer dimensions of the fiber nettings are approximately 1 cm to approximately 100 cm, preferably approximately 1 cm to approximately 20 cm. The core of a fiber netting may be more dense than the outer portion of the fiber netting. In the region of the core of the fiber nettings the density may range from approximately 35 kg/m³ to approximately 60 kg³, and in the outer portion of the fiber netting the density may be approximately 25 kg/m³. In this embodiment the particles are preferably held by the inner of the fiber nettings. Further, the particulates migrate from the outer portion of the fiber nettings into the inner portion of the fiber nettings.

The volume of the bag can range from approximately 0.5 I to approximately 100 I, preferably approximately 0.5 I to approximately 100 I, more preferably from approximately 1 I to approximately 70 I. The number of fiber nettings in one bag can vary depending on the volume.

The bag may be a net, a textile and/or a fleece. The bag may comprise polyethylene and/or polyvinylchloride. The bag may be a three-dimensional grid (retrofit/upgrade set). The grid may comprise metal, plastic or the like. In one embodiment the bag may comprise a cubic like shape. Such filter insert may be inserted particularly easily into a cartridge housing or into a pipe-shaped housing.

The invention relates to a filter having the filter insert described before, a housing, in which the filter insert is arranged, at least one inlet, through which a fluid to be cleaned flows into the housing, and at least one outlet, through which a fluid to be cleaned by the filter insert flows out of the housing. As has been described above, the fiber nettings are distributed in the bag around the outlet and outlets, respectively of the housing to form a filter length and filter path, respectively for depositing of particles in the fluid.

The filter comprises housing fastening means, such as a threat, arranged between the at least one inlet or the at least one outlet or alternatively around the at least one inlet and the at least one outlet, wherein the filter is a cartridge filter. The housing may be fastened on the threat.

The filter may be configured such that during use a pressure difference between approximately 5 mbar to approximately 100 mbar, preferably approximately 5 mbar to approximately 50 mbar, preferably between approximately 5 mbar to approximately 15 mbar prevails between the inlet and outlet. It is in an advantage of the fiber nettings in the bag that a comparably low operation pressure prevails in the filter. Thereby, a little pressure loss is caused in a fluid conduit in which the filter is installed. The filtration with the filter insert according to the present invention requires less energy as compared with the prior art. Thereby, an almost pressure free and energy minimized filtration is achieved.

The invention also discloses a method for changing a filter insert of a filter including the steps of opening the housing of a filter, removing the cartridge filter insert and arranging the filter insert described above in the filter housing, respectively and closing the housing.

In one embodiment the filter material may be cleaned mechanically and possibly regenerated and/or recycled. It is possible to clean distinct fiber nettings or the entire filter material mechanically.

The filter material may also be suitable as disposable material for disposal in household garbage after a single utilization.

The filter material, i.e. the fiber nettings, may be used in combination with other filter materials. The filter insert may comprise an arbitrary number and size of fiber nettings for filtering a fluid arranged in a filter with a housing for the filter insert (filter media) having an inlet for contaminated fluid and an outlet for cleaned fluid. Thereby, the size of the bag, the size of the fiber nettings and the number of the fiber nettings, the shape of the bag and the shape of the fiber nettings may be optimized depending on the application. The material of the bag may be in one embodiment a textile. In another embodiment the bag may be a textile-like material. In a further embodiment the bag may be a coarse-meshed or a fine-meshed grid or web or net. In all embodiments the size and form of the bag may be arbitrarily chosen depending on the application.

The material of the bag may be pipe-like or net-like with two open ends or only one closed end that are finally closed at both ends or merely at one end, for example by thermal welding or ultrasonic welding. Alternatively, the bag material may be closed by a so-called clip, such as a metal clip, or closed by a seam. It is also possible that the bag is open at both ends. Thereby, a restriction is only achieved by a limited number of dimensions. In one embodiment the restriction may only be available in the upper and lower direction, for example, whereas the fiber nettings may be movable in the lateral direction more or less free. It is also possible that the fiber nettings may be freely movable in the upper or lower direction and are limited in the lateral direction in their movement. Thereby, all possible shapes of filter housings can be supported.

The material of the bag may be coated or may be additionally machined in an arbitrary way.

The three-dimensional bag functions as a collection unit and casing, respectively for an arbitrary number of fiber nettings (filter media), wherein also an arbitrary combination of different fiber nettings is possible to achieve an optimal arrangement of the fiber nettings within the bag and to achieved an improvement of the fluid current through the fiber nettings and to support the generation of water channels. Thereby, an essentially pressure free and energy minimum filtration can be assured, as has been described above. The three-dimensional bag with the fiber nettings comprises a flexible shape, even so it has in its unloaded state a pipe-shaped or net-shaped configuration.

The filter insert is suitable for use in an arbitrary cartridge filter independent of equipment type, size and manufacturer. The filter insert may be used with an arbitrary filter housing having an arbitrary geometric shape, with an arbitrary velocity of flow, with an arbitrary temperature or arbitrary other parameters.

The filter insert according to the present invention avoids clogging of a filter and filter equipment, respectively, since the bag prevents a free and uncontrolled distribution of the fiber nettings.

The fiber nettings prevent a so called filter cake that may be caused by filters of the prior art. Since an incurrence of a filter cake and/or mud cake and/or flushing mud cake is avoided, a filter having the inventive filter inset may be operated by a lower pressure as compared to prior art filters.

A conventional cartridge filter acts as an areal filter and/or surface filter. The plurality of fiber nettings act a plurality of filters arranged serially. Thus, the plurality of fiber nettings have a depth effect and the particulate material, dirt and the like in the fluid is absorbed by the fibers of the filter. Since a plurality of fibers are arranged in serially by the plurality of fiber balls, incurrence of a filter cake or the like can be avoided.

Further, the filter insert may be easily exchanged, since merely the bag has to be exchanged to remove an arbitrary number of filter materials, filter media and/or fiber nettings from the filter. The filter insert according to the present invention avoids negative effects for a threat, a pump, etc. Despite the low weight of the fiber nettings and the low density of the fiber nettings the present invention does not cause any floating of the fiber nettings into the upper direction.

The invention is now described by an exemplary and non limiting embodiment under reference to the figure, wherein:

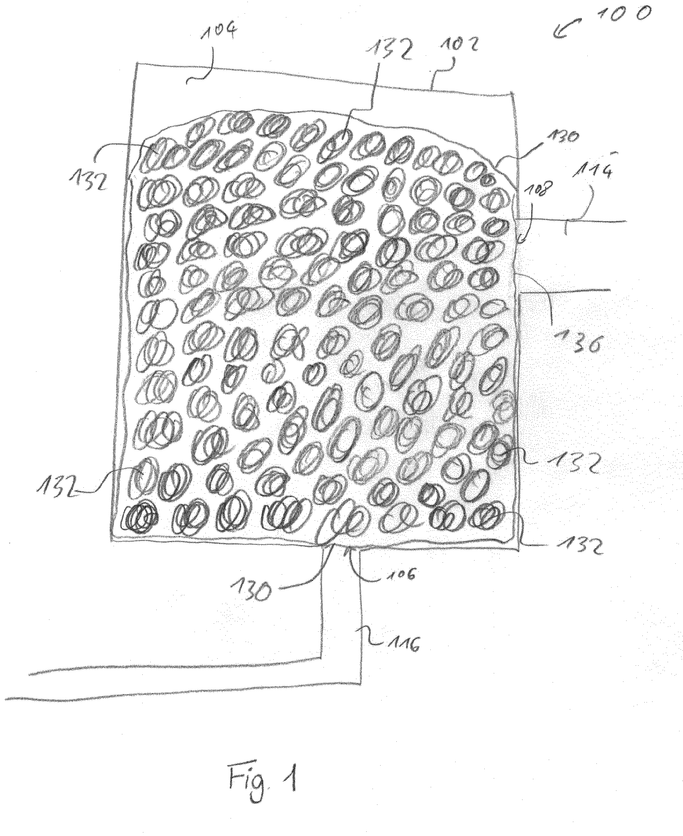

Figure 1 shows a section through one embodiment of the invention.

Figure 1 shows a filter 100 having a cartridge housing 102, in which the bag 130 with a plurality of fiber nettings 132 is located. At the wall an inlet 108 is arranged, to which a fluid conduit 114 is connected, through which water of a swimming pool or whirl pool flows in the direction of the inlet 108 and filter 100. Through an outlet 106, water is flowing over a conduit 116 from the filter 100 to a swimming pool or whirl pool, for example. It is to be understood that arbitrary other filter configurations are possible.

In the housing, i.e. the cartridge housing 102 the filter insert with the net 130, through which the water passes, and a plurality of fiber nettings 132 located therein according to the present invention is arranged. The fiber nettings 132 are distributed in the bag 130 in the housing 102. The water 104 flows through a plurality of fiber nettings 118, such that a long filter path is formed. For exchanging the filter the housing 102 may be opened and the bag 130 may be substituted by a new bag. The fiber nettings 132 filter the water 104 in the housing before exiting through the outlets. The plurality of fiber nettings 132 form a long filter path for filtering the water 104.

The fiber nettings 132 may comprise an arbitrary size or shape. The fibers of a fiber netting 132 are mechanically linked with each other in a non-woven fashion. The fibers of a fiber netting 132 may be merely linked in a non-woven manner without further mechanical element linking the fibers. The fibers may be filaments and/or staple fibers.

A prior art cartridge filter having a diameter of approximately 10 cm (4 inch) has a mass of 100 g, whereas the equivalent inventive filter insert has a mass of 50 g.

The present invention has the advantage that by a comparably simple means an effective filter insert is formed, which may be easily exchanged on the one hand and can form a long and effective filter path on the other hand.

Further, the inventive filter insert has to be changed less frequently.

## Claims

1. A filter (100) for cleaning water of a swimming pool, a whirl pool or the like, comprising:
- a filter insert (130), having
- a plurality of fiber nettings (132) each comprising a plurality of fibers and through which water may flow in a current, wherein the fibers of the fiber netting filter solids floating in water by agglomerating the solids to the fibers; and
- a bag (130), in which the plurality of fiber nettings are arranged and through which water may flow and pass to the fiber nettings (132);
wherein a fiber netting (132) may comprise at least one of the following:
- a fiber fleece;
- a fiber meshwork;
- a fiber network; and/or
- non-woven linked fibers;
- a housing (102) in which the filter insert (130) is arranged;
- at least one inlet (114) through which water to be cleaned flows into the housing;
- at least one outlet (116) through which water cleaned by the filter insert flows out of the housing; and
- housing fixing means between the at least one inlet or at least one outlet or around the at least one inlet and the at least one outlet, wherein the filter (100) is designed as a cartridge filter.

2. The filter (100) according to claim 1, wherein the fiber comprises a mechanically roughened surface.

3. The filter (100) according to claim 1 or 2, wherein the fiber netting comprises at least one of the following:
- a plurality of synthetic fibers;
- a plurality of thermoplastic fibers;
- a plurality of polymer fibers;
- a plurality of cotton fibers;
- a plurality of viscose fibers;
- a plurality of polypropylene fibers;
- a plurality of polyester fibers;
- a plurality of natural fibers;
- a plurality of cellulose fibers;
- a mixture of said fibers and/or
- a fleece of said fibers.

4. The filter (100) according to one of claims 1 to 3, wherein the fibers are coated and/or impregnated at least with one of the following:
- a soluble polymeric material;
- polyacrylamide;
- polyvinyl alcohol;
- alginate;
- polyacrylate;
- derivates of cellulose.

5. The filter (100) according to one of claims 1 to 4, wherein the fiber netting has essentially one of the following forms:
- spherical;
- ellipsoid;
- cylindrical;
- cuboid;
- cubical; or
- an arbitrary three-dimensional shape.

6. The filter (100) according to one of claims 1 to 5, wherein
- the fiber netting comprises a longitudinally related mass of approximately 1.7 dtex to approximately 150 dtex;
- the fiber netting comprises a longitudinally related mass of approximately 1.7 dtex to approximately 80 dtex;
- the fiber netting comprises in a dry state a density of approximately 10 kg/m³ to approximately 60 kg/m³; and/or
- the outer dimensions of the fiber nettings are approximately 1 cm to approximately 20 cm.

7. The filter (100) according to one of claims 1 to 6, wherein the core of a fiber netting is more dense than the outer portion of the fiber netting.

8. The filter (100) according to one of claims 1 to 7, wherein the bag comprises at least one of the following:
- net;
- a textile;
- a fleece;
- a metal grid;
- a plastic grid;
- polyethylene;
- polyvinylchloride.

9. The filter (100) according to one of claims 1 to 8, wherein the bag has a pipe like shape.

10. A method of changing a filter insert of a filter (100) according to any one of the claims 1 to 9, comprising the following steps:
- opening the housing (102) of the filter (100);
- removing the filter insert;
- arranging a filter insert (130) in the housing (102); and
- closing the housing (102).

## Patentansprüche

1. Filter (100), zum Säubern von Wasser eines Schwimmbeckens, eines Whirlpools oder dergleichen, aufweisend:
- einen Filtereinsatz (130) mit
- eine Mehrzahl von Fasergeflechten (132), die je eine Mehrzahl von Fasern aufweisen und durch die Wasser in einem Strom fließen kann, wobei die Fasern der Fasergeflechte im Wasser schwebende Feststoffe durch Agglomerieren der Feststoffe an den Fasern filtern; und
- einer Tasche (130), in der die Mehrzahl von Fasergeflechten angeordnet sind und durch die Wasser fließen und zu den Fasergeflechten (132) vorbeiströmen kann;
wobei ein Fasergeflecht (132) zumindest eines von folgendem aufweisen kann:
- ein Faservlies;
- ein Fasermaschenwerk;
- ein Fasernetzwerk; und/oder
- nicht gewoben verbundene Fasern;
- ein Gehäuse (102), in dem der Filtereinsatz (130) angeordnet ist;
- zumindest einen Einlass (114), durch den zu reinigendes Wasser in das Gehäuse, strömt;
- zumindest einen Auslass (116), durch den durch den Filtereinsatz gereinigtes Wasser aus dem Gehäuse fließt;
- Gehäusebefestigungsmittel zwischen dem zumindest einem Einlass oder zumindest einem Auslass oder um zumindest einem Einlass und dem zumindest einem Auslass, wobei der Filter (100) als Kartuschenfilter konstruiert ist.

2. Filter (100) nach Anspruch 1, wobei die Faser eine mechanisch aufgeraute Oberfläche aufweist.

3. Filter (100) nach Anspruch 1 oder 2, wobei die Fasergeflechte zumindest eines von Folgendem aufweisen:
- eine Mehrzahl synthetischer Fasern;
- eine Mehrzahl thermoplastischer Fasern;
- eine Mehrzahl Polymerfasern;
- eine Mehrzahl Baumwollfasern;
- eine Mehrzahl Viskosefasern;
- eine Mehrzahl Polypropylenfasern;
- eine Mehrzahl Polyesterfasern;
- eine Mehrzahl natürlicher Fasern;
- eine Mehrzahl Cellulosefasern;
- eine Mixtur dieser Fasern und/oder
- ein Vlies der Fasern.

4. Filter (100) nach einem der Ansprüche 1 bis 3, wobei die Fasern mit zumindest einem des Folgenden beschichtet und/oder imprägniert sind:
- einem löslichen Polymermaterial;
- Polyacylamid;
- Polyvinylalkohol;
- Alinat;
- Polyacrylart;
- Cellulosederivate.

5. Filter (100) nach einem der Ansprüche 1 bis 4, wobei die Fasergeflechte im Wesentlichen eine der folgenden Formen aufweisen:
- kugelförmig;
- ellipsoid;
- zylinderförmig;
- quaderförmig;
- würfelförmig; oder
- eine beliebige dreidimensionale Form.

6. Filter (100) nach einem der Ansprüche 1 bis 15, wobei
- das Fasergeflecht eine längenbezogene Masse von etwa 1,7 dtex bis etwa 150 dtex aufweist;
- das Fasergeflecht eine längenbezogene Masse von etwa 1,7 dtex bis etwa 80 dtex aufweist;
- das Fasergeflecht in einem trockenen Zustand eine Dichte von etwa 10 kg/m³ bis etwa 60 kg/m³; und/oder
- die äußeren Abmessungen der Fasergeflechte etwa 1 cm bis etwa 20 cm betragen.

7. Filter (100) nach einem der Ansprüche 1 bis 6, wobei der Kern eines Fasergeflechtes dichter als der äußere Bereich des Fasergeflechtes ist.

8. Filter (100) nach einem der Ansprüche 1 bis 7, wobei die Tasche zumindest eines von Folgendem aufweist:
- ein Netz;
- ein Textil;
- ein Vlies;
- ein Metallgitter;
- ein Plastikgitter;
- Polyethylen;
- Polyvinylchlorid.

9. Filter (100) nach einem der Ansprüche 1 bis 8, wobei die Tasche eine schlauchförmige Form aufweist.

10. Verfahren zum Wechseln eines Filtereinsatzes eines Filters (100) nach einem der Ansprüche 1 bis 9, aufweisend die folgenden Schritte:
- Öffnen des Gehäuses (102) des Filters (100);
- Entfernen des Filtereinsatzes;
- Anordnen eines Filtereinsatzes (130) in dem Gehäuse (102); und
- Schließen des Gehäuses (102).

## Revendications

1. Filtre (100) pour purifier l'eau d'un bassin de natation, d'un jacuzzi ou similaire, comprenant :
- un insert de filtre (130), lequel comporte :
- une pluralité de treillis de fibres (132) dont chacun comprend une pluralité de fibres et au travers desquels l'eau peut s'écouler selon un courant, dans lequel les fibres des treillis de fibres filtrent des solides qui flottent dans l'eau en agglomérant les solides sur les fibres ; et
- un sac (130), dans lequel les treillis de fibres de la pluralité de treillis de fibres sont agencés et au travers duquel l'eau peut s'écouler pour arriver au niveau des treillis de fibres (132) ; dans lequel :
un treillis de fibres (132) peut comprendre au moins l'un des éléments qui suivent :
- un tissu non tissé de fibres ;
- un maillage de fibres ;
- un réseau de fibres ; et/ou
- des fibres liées non tissées ;
- un logement (102) à l'intérieur duquel l'insert de filtre (130) est agencé ;
- au moins une entrée (114) au travers de laquelle l'eau qui doit être purifiée s'écoule à l'intérieur du logement ;
- au moins une sortie (116) au travers de laquelle l'eau qui est purifiée au moyen de l'insert de filtre s'écoule hors du logement ; et
- un moyen de fixation de logement entre l'au moins une entrée ou l'au moins une sortie ou autour de l'au moins une entrée et de l'au moins une sortie, dans lequel le filtre (100) est conçu en tant que cartouche filtre.

2. Filtre (100) selon la revendication 1, dans lequel la fibre comprend une surface rendue rugueuse mécaniquement.

3. Filtre (100) selon la revendication 1 ou 2, dans lequel le treillis de fibres comprend au moins l'un des éléments qui suivent :
- une pluralité de fibres synthétiques ;
- une pluralité de fibres thermoplastiques ;
- une pluralité de fibres en polymère ;
- une pluralité de fibres en coton ;
- une pluralité de fibres en viscose ;
- une pluralité de fibres en polypropylène ;
- une pluralité de fibres en polyester ;
- une pluralité de fibres naturelles ;
- une pluralité de fibres en cellulose ;
- un mélange desdites fibres et/ou
- un tissu non tissé desdites fibres.

4. Filtre (100) selon l'une des revendications 1 à 3, dans lequel les fibres sont revêtues et/ou imprégnées au moins avec l'un des éléments qui suivent :
- un matériau polymérique soluble ;
- un polyacrylamide ;
- de l'alcool polyvinylique ;
- un alginate ;
- un polyacrylate ;
- des dérivés de cellulose.

5. Filtre (100) selon l'une des revendications 1 à 4, dans lequel le treillis de fibres présente essentiellement l'une des formes qui suivent :
- sphérique ;
- ellipsoïde ;
- cylindrique ;
- cuboïde ;
- cubique ; ou
- une forme tridimensionnelle arbitraire.

6. Filtre (100) selon l'une des revendications 1 à 5, dans lequel :
- le treillis de fibres comprend une masse liée longitudinalement d'approximativement 1,7 dtex à approximativement 150 dtex ;
- le treillis de fibres comprend une masse liée longitudinalement d'approximativement 1,7 dtex à approximativement 80 dtex ;
- le treillis de fibres présente, dans un état à sec, une densité d'approximativement 10 kg/m³ à approximativement 60 kg/m³ ; et/ou
- les dimensions externes des treillis de fibres sont d'approximativement 1 cm à approximativement 20 cm.

7. Filtre (100) selon l'une des revendications 1 à 6, dans lequel la partie centrale d'un treillis de fibres est plus dense que la partie externe du treillis de fibres.

8. Filtre (100) selon l'une des revendications 1 à 7, dans lequel le sac comprend au moins l'un des éléments qui suivent :
- un filet ;
- un textile ;
- un tissu non tissé ;
- une grille en métal ;
- une grille en matière plastique ;
- du polyéthylène ;
- du chlorure de polyvinyle.

9. Filtre (100) selon l'une des revendications 1 à 8, dans lequel le sac présente une forme similaire à un tube.

10. Procédé de changement d'un insert de filtre d'un filtre (100) selon l'une quelconque des revendications 1 à 9, comprenant les étapes qui suivent :
- l'ouverture du logement (102) du filtre (100) ;
- l'extraction de l'insert de filtre ;
- l'agencement d'un insert de filtre (130) dans le logement (102) ; et
- la fermeture du logement (102).
